## Europäisches Patentamt
## European Patent Office
## Office européen des brevets

(19)

(11) Veröffentlichungsnummer: **0 309 697 B1**

(12)

# EUROPÄISCHE PATENTSCHRIFT

(45) Veröffentlichungstag der Patentschrift: **11.12.91**

(21) Anmeldenummer: **88112925.8**

(22) Anmeldetag: **09.08.88**

(51) Int. Cl.⁵: **B60T 8/00**, B60T 8/18,
B60T 8/30

(54) **Bremssystem für ein Schleppfahrzeug für Flugzeuge.**

(30) Priorität: **28.09.87 DE 3732647**

(43) Veröffentlichungstag der Anmeldung:
**05.04.89 Patentblatt 89/14**

(45) Bekanntmachung des Hinweises auf die
Patenterteilung:
**11.12.91 Patentblatt 91/50**

(84) Benannte Vertragsstaaten:
**AT BE CH DE ES FR GB IT LI NL SE**

(56) Entgegenhaltungen:
**DE-A- 1 755 021**
**DE-A- 1 803 586**
**DE-A- 2 815 337**
**FR-A- 2 170 982**
**GB-A- 2 084 271**

(73) Patentinhaber: **Krauss-Maffei Aktiengesellschaft**
**Krauss-Maffei-Strasse 2**
**W-8000 München 50(DE)**

(72) Erfinder: **Pollner, Jürgen, Dipl.-Ing. (FH)**
**Fritz-Reuter-Strasse 36**
**W-8000 Munchen 60(DE)**
Erfinder: **Trummer, Gregor, Dipl.-Ing. (FH)**
**Alpenblick 5**
**W-8134 Aschering(DE)**
Erfinder: **Mölzer, Peter, Dipl.-Ing.**
**Geranienweg 7**
**W-8061 Schwabhausen(DE)**
Erfinder: **Fichtner, Karl, Dipl.-Ing.(FH)**
**Wiesenstrasse 3**
**W-8000 München 50(DE)**

## Beschreibung

Die Erfindung betrifft ein Bremssystem gemäß dem Oberbegriff des Anspruchs 1.

Das Bremssystem soll bevorzugt bei einem Schleppfahrzeug für Flugzeuge angewendet werden, bei dem das Bugrad des Flugzeugs am Schleppfahrzeug abgestützt und fest eingespannt wird. Solche Schleppfahrzeuge sind aus DE-OS 33 27 628 bzw. DE-OS 33 27 629 bekannt. Ein solches Schleppfahrzeug bildet eine im wesentlichen starre Einheit mit dem an ihm eingespannten Bugrad des geschleppten Flugzeugs, wodurch es möglich ist, auch sehr große und sehr schwere Flugzeuge wesentlich einfacher, sicherer und mit höherer Geschwindigkeit zu schleppen und zu manövrieren, als es mit dem bisher im Einsatz befindlichen, durch eine Zugstange mit dem Bugfahrwerk gekoppelten Schleppfahrzeugen möglich ist. Dies eröffnet insbesondere auch die Möglichkeit, die sogenannten Taxifahrten der vollbesetzten Flugzeuge zwischen dem Flugsteig und der Start- bzw. Landebahn nicht mehr, wie bisher, mittels der Flugzeugtriebwerke, sondern unter Verwendung eines Schleppfahrzeuges der erfindungsgemäßen Art durchzuführen, was eine erhebliche Einsparung an Treibstoff- und sonstigen Kosten bedeuten würde. Mit den bisher üblichen Zugstangenfahrzeugen ist dies wegen der Instabilität des Schleppverbandes, die auch nur geringe Schleppgeschwindigkeiten zuläßt, nicht durchführbar.

Die Konzeption des starr mit dem Bugrad verbundenen Schleppfahrzeugs und der vorgesehene Einsatz auch bei höheren Schleppgeschwindigkeiten bringt jedoch zusätzliche strenge Anforderungen hinsichtlich der Sicherheit des Schleppbetriebes mit sich. Eine Forderung besteht darin, daß in keinem Fahrzustand Kräfte auf das Bugfahrwerk übertragen werden dürfen, die dieses überlasten und beschädigen können. Andererseits darf aber auch die Verbindung von Schleppfahrzeug und Bugfahrwerk während des Schleppbetriebes auf keinen Fall gelöst werden können. Dies steht im Gegensatz zu den üblichen Zugstangen-Schleppfahrzeugen, deren Verbindung mit dem Bugfahrwerk einen Scherbolzen aufweist, der bei Überlastung abschert und das Bugfahrwerk freigibt.

Kräfte, die zu einer Richtungsinstabilität des Schleppverbandes und zu einer Überlastung des Bugfahrwerkes führen können, können vor allem beim Bremsen auftreten. Wenn im Augenblick des Bremsens die Längsachse des Schleppfahrzeugs im Winkel zur Flugzeuglängsachse steht, wie z.B. beim Kurvenfahren, so erzeugen die Bodenreibungskräfte der Fahrzeugräder einerseits und der Impuls der großen Flugzeugmasse andererseits ein Drehmoment um die Hochachse des Schleppfahrzeuges, welches den Winkel zwischen der Fahrzeug- und der Flugzeuglängsachse zu vergrößern sucht und zum sogenannten Klappmessereffekt (jack-knifing) führen kann, bei dem das Schleppfahrzeug sich unter dem Flugzeug durchdreht und das Bugfahrwerk abgedreht wird. Zwar sind Schleppfahrzeuge der erfindungsgemäßen Art an sich richtungsstabiler und gegen den Klappmessereffekt weniger anfällig als Zugstangenfahrzeuge; trotzdem kann beim Bremsen, wenn die Hinterräder vorzeitig die Bodenhaftung verlieren, ein instabiler Zustand entstehen, der zu einem Überdrehen und damit zu einer Beschädigung des Bugfahrzeuges führen kann.

Aus US-PS 4 113 041 ist ein mit dem Bugfahrwerk über eine Zugstange verbundenes Schleppfahrzeug bekannt, bei dem zur Vermeidung instabiler Fahrzustände und insbesondere des Klappmessereffektes die Antriebskraft des Schleppfahrzeugs und/oder die Bremskraft des Schleppverbandes in Abhängigkeit von der in der Zugstange herrschenden Zug- oder Schubkraft gesteuert und begrenzt wird. Hierbei erfolgt jedoch das Bremsen überwiegend mittels der Fahrwerksbremsen des Flugzeugs, die entweder vom Fahrer des Schleppfahrzeugs über eine Fernbedienung direkt betätigt werden oder vom Piloten des Flugzeugs anhand von Bremsbefehlen, die ihm vom Schleppfahrzeug aus übermittelt oder optisch angezeigt werden, betätigt werden müssen. Dieses System setzt entweder kooperativ ausgerüstete Flugzeuge voraus, deren Bremssystem vom Schleppfahrzeug aus fernsteuerbar ist, oder es ist, wenn der Pilot sich nach vom Schleppfahrzeug übermittelten Bremsbefehlen richten muß, extrem unsicher und fehleranfällig.

Grundsätzlich sind Schleppfahrzeuge der erfindungsgemäßen Art nur dann einsetzbar, wenn mit ihnen alle gängigen Typen von Verkehrsflugzeugen geschleppt werden können, ohne daß diese mit zusätzlichen Einrichtungen für das Zusammenwirken mit dem Schleppfahrzeug ausgerüstet sind. Ferner ist es erwünscht, daß der Betrieb des Schleppfahrzeuges nicht oder möglichst wenig von komplizierten Programmsteuereinrichtungen, zugehörigen Sensoren, Signalübermittlungsstrecken u.dgl. abhängen soll. Derartige Einrichtungen sind im rauhen Flughafenbetrieb, insbesondere unter den extremen vorkommenden Witterungsbedingungen, der Nähe starker elektromagnetischer Signalquellen usw. sehr störanfällig, und Störungen dieser Systeme können zu gefährlichen Situationen führen, die im Hinblick auf die Sicherheit des zu schleppenden Flugzeugs und seiner Insassen auf keinen Fall in Kauf genommen werden können.

Bei Bremssystemen für Fahrzeuge allgemeiner Art ist es grundsätzlich bekannt, z.B. aus DE-OS 33 11 556, die Bremskräfte an den Vorder- und Hinterrädern derart unterschiedlich zu steuern, daß die Bremskraft an den Vorderrädern immer größer als an den Hinterrädern ist. Damit wird der Tatsache Rechnung getragen, daß beim Bremsen die Vorderräder stärker vom Gewicht des Fahrzeugs belastet werden als die Hinterräder. Aus DE-OS 28 15 337 ist ein Bremssystem mit zwei Bremskreisen bekannt, wobei die Bremskreise unterschiedlich Kombinationen von Vorder- und Hinterrädern umfassen können, z.B. gemäß Fig. 4 derart, daß jeder Bremskreis die beiden Vorderräder und je eines der Hinterräder enthält. Eine Lehre über die unterschiedliche Bemessung der Bremskräfte an den zu je einem Bremskreis gehörenden Rädern enthält diese Druckschrift nicht.

Der Erfindung liegt die Aufgabe zugrunde, unter Beachtung der vorgenannten Forderungen ein Bremssystem der genannten Art anzugeben, bei dem unzulässig hohe Belastungen des Bugfahrwerks des Flugzeuges beim Bremsen des Schleppfahrzeugs, und insbesondere der sogenannte Klappmessereffekt, zuverlässig und mit einfachen Mitteln vermieden werden.

Die erfindungsgemäße Lösung der Aufgabe ist im Anspruch 1 angegeben. Die Unteransprüche beziehen sich auf weitere vorteilhafte Ausgestaltungen der Erfindung.

Durch die Lösung nach Anspruch wird dafür gesorgt, daß auch bei Ausfall eines Bremskreises der andere Bremskreis immer noch eine auf beiden Fahrzeugseiten gleiche Bremswirkung, also ohne Drehmoment bezüglich der Hochachse, erzeugen kann, wobei sowohl in je einem Bremskreis als auch in beiden Bremskreisen zusammen die Bremskraft an den Vorderrädern erheblich größer als an den Hinterrädern ist. Dadurch wird dafür gesorgt, daß im Fall einer Überbremsung, also bei einem Blockieren der Fahrzeugräder insbesondere bei nasser und schlüpfriger Fahrbahn, zuerst die Vorderräder blockieren, während die Hinterräder noch drehen und die Seitenführung behalten. Die Bodenreibungskraft dieser Hinterräder erzeugen dann zusammen mit der Trägheitskraft des Flugzeugs einen Drehmoment bezüglich der Hochachse des Schleppfahrzeugs, welches im Sinne eines Geraderichtens des Schleppverbandes wirkt, so daß es nicht zum Klappmessereffekt, d.h. zu einer Vergrößerung des Ausknickwinkels und zu einer Beschädigung des Bugfahrwerks kommen kann.

Durch die Merkmale des Anspruchs 2 werden die vorgenannten Wirkungen mit besonders einfachen Mitteln, insb. mit einer minimalen Anzahl von Bremszylindern, die an allen Rädern gleich ausgebildet sein können, und ohne individuelle Steuerung des Bremsdruckes an den einzelnen Rädern erzielt.

Die im Anspruch 3 angegebene Lösung, die auch selbständig erfinderische Bedeutung hat, hat den Vorteil, daß die vom Schleppfahrzeug ausgeübte Bremskraft, die ja über das Bugfahrwerk auf das Flugzeug übertragen werden muß, nicht über einen Grenzwert ansteigen kann, der zu einer Überlastung des Bugfahrwerkes führen kann, wobei dieser Grenzwert insbesondere an die kleineren in Betracht kommenden Flugzeugtypen und ihre entsprechend schwächer bemessenen Bugfahrwerke angepaßt sein kann. Andererseits ist beim Schleppen sehr großer und schwerer Flugzeuge, deren Bugfahrwerke entsprechend stärker dimensioniert sind, eine entsprechende Heraufsetzung des Grenzwertes der Bremskraft, und damit eine stärkere Bremswirkung möglich.

Das an sich bekannte Merkmal des Anspruchs 6 hat den Vorteil, daß zur gewichtslastabhängigen Steuerung des Bremskraftverstärkers keinerlei Sensoren für das Messen der Gewichtslast des Bugfahrwerkes und keine Einrichtungen zur Verarbeitung der Sensorensignale erforderlich sind. Der belastungsabhängige Druck im vorhandenen Niveauregelsystem wird direkt zur Steuerung des Bremskraftbegrenzers verwendet, was auf rein hydraulischem Wege mit den Mitteln des ohnehin vorhandenen Hydraulikkreises erfolgen kann.

Eine Ausführungsform der Erfindung wird anhand der Zeichnungen näher erläutert. Es zeigt :

Fig. 1    eine perspektivische Schemadarstellung eines Schleppfahrzeugs beim Schleppen eines Flugzeugs;

Fig. 2    eine Skizze in Draufsicht zur Veranschaulichung der beim Bremsen auftretenden Kräfte;

Fig. 3    eine Schemadarstellung des Hydraulikkreises für die Niveauregelung und das Bremsen des Schleppfahrzeugs;

Fig. 4    eine grafische Darstellung der Abhängigkeit der maximalen Bremskraft von der Gewichtslast.

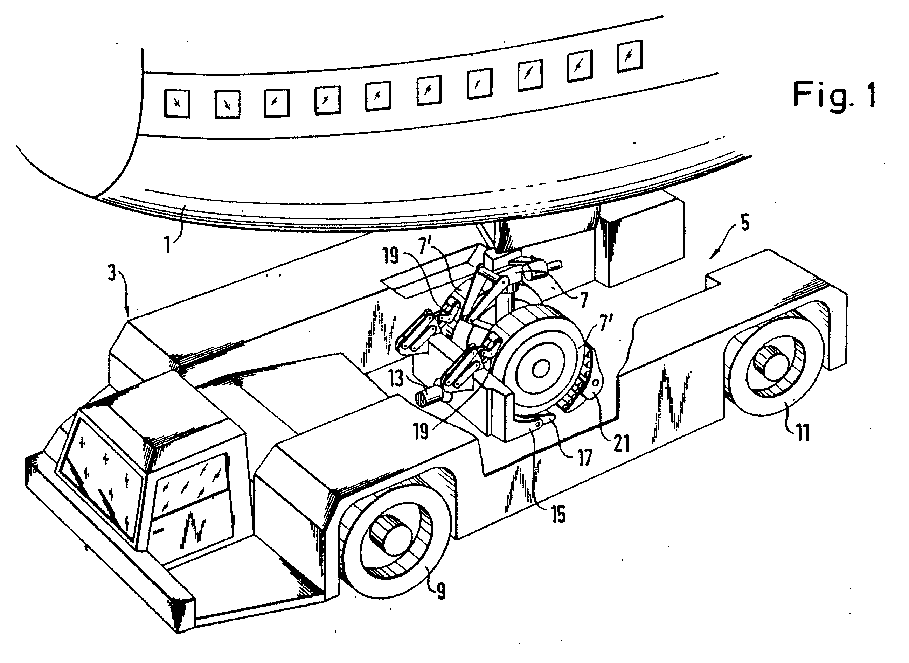

Das in Fig. 1 beim Schleppen eines Großraumflugzeuges 1 dargestellte Schleppfahrzeug 3 hat ein gabelförmiges Fahrgestell mit einer nach hinten offenen Ausnehmung 5, in der das Bugfahrwerk 7 des Flugzeugs 1 aufgenommen und mittels einer Hub- und Arretiervorrichtung angehoben und in einer zwischen den Vorderrädern 9 und Hinterrädern 11 des Fahrzeugs 3 liegenden Position starr festgelegt werden kann.

Die in Fig. 1 nur als Beispiel dargestellte Hub- und Arretiervorrichtung umfaßt eine um eine Längsachse 13 drehbar gelagerte Anschlagplatte 15 mit einer kippbar gelagerten Auffahrrampe 17 und oberen Niederhaltern 19, sowie von hinten her gegen die Bugräder 7' klappbaren und zu einer Hubbewegung antreibbaren Hubschaufeln 21. Durch diese auf die Umfangsfläche der Bugräder 7' wirkenden Einrichtungen werden diese starr eingespannt. Die Konstruktion der Hub- und Arretiervorrichtung ist jedoch für die vorliegende Erfindung nicht wesentlich und kann auch in anderer Weise ausgeführt sein.

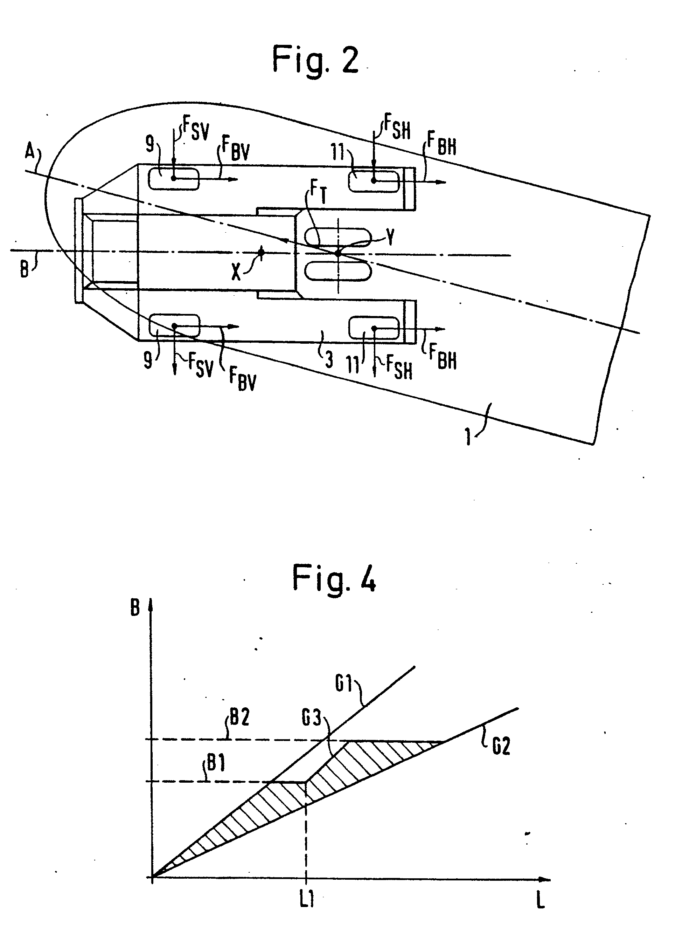

Für das Manövrieren des Schleppfahrzeuges 3 sind die Vorderräder 9 oder die Hinterräder 11, vorzugsweise aber alle vier Räder lenkbar. Fig. 2 zeigt eine Stellung von Schleppfahrzeug 3 und Flugzeug 1, die bei einer Kurvenfahrt, gegebenenfalls aber auch beim Geradeausfahren aufgrund von Instabilitäten auftreten kann, bei der die Flugzeuglängsachse A mit der Fahrzeuglängsachse B einen Winkel einschließt.

Die von der bewegten Masse des Flugzeuges parallel zur Flugzeuglängsachse A erzeugte Trägheitskraft $F_T$ wirkt beim Kuppelpunkt Y des Bugfahrwerkes auf das Schleppfahrzeug ein und hat eine quer zur Fahrzeuglängsachse B gerichtete Komponente, der die an den Fahrzeugrädern wirkenden Seitenführungskräfte entgegen wirken. Man erkennt, daß die an den Vorderrädern 9 wirkenden Seitenführungskräfte $F_{SV}$ und die Trägheitskraft $F_T$ ein Drehmoment bezüglich einer vertikalen Achse durch den Fahrzeugschwerpunkt X erzeugen, welches übersteuernd, d. h. im Sinne einer Vergrößerung des Winkels zwischen den Längsachsen A und B wirkt, während umgekehrt die an den Hinterrädern 11 wirkenden Seitenführungskräfte $F_{SH}$ und die Trägheitskraft $F_T$ ein untersteuerndes, d. h. den Winkel verkleinerndes Drehmoment erzeugen. Diese Drehmomente halten sich etwa die Waage. Wird nun das Fahrzeug gebremst, so wirken an den Vorder- und Hinterrädern zusätzlich die Bremskräfte $F_{BV}$ bzw. $F_{BH}$. Wenn an irgendeinem Rad die Resultierende aus Seitenführungskraft und Bremskraft größer als die Bodenreibung wird, tritt Überbremsung, d. h. ein Blockieren und Gleiten des Rades ein, wodurch die Seitenführungskraft wegfällt. Würde ein solches Überbremsen an den Hinterrädern eintreten, während die Vorderräder noch ihre Seitenführung behalten, so fällt das stabilisierende Drehmoment schlagartig weg und der freiwerdende Drehimpuls führt zu einer plötzlichen Vergrößerung des Winkels zwischen den Achsen A und B und bei Erreichen eines bestimmten Winkels zu einer Beschädigung des Bugfahrzeuges.

Vor allem das beim Bremsen durch die Masse des Schleppfahrzeugs und die Auflast des Bugfahrwerkes erzeugte, die Hinterräder entlastende Nickmoment bewirkt, daß das Überbremsen und Gleiten zuerst an den Hinterrädern eintritt.

Dies wird erfindungsgemäß dadurch vermieden, daß die Bremskraft an den Vorderrädern 9 stets wesentlich größer gehalten wird als an den Hinterrädern 11, so daß ein etwaiges seitliches Gleiten immer zuerst an den Vorderrädern eintritt. In diesem Fall verlieren die Vorderräder 9 ihre Seitenführung und damit fällt auch das von ihnen erzeugte übersteuernde Drehmoment weg, während das von den Hinterrädern 11 erzeugte untersteuernde Drehmoment erhalten bleibt und einer Vergrößerung des Winkels zwischen den Längsachsen A und B, also dem gefürchteten Klappmessereffekt, entgegenwirkt.

Versuche mit Vollbremsung haben gezeigt, daß es bei gegebenem Bremskraftverhältnis zwischen Vorder- und Hinterrädern von der Masse und Gewichtslast des geschleppten Flugzeuges und vom Reibungskoeffizienten der Fahrbahn abhängt, ob zuerst die Hinterräder oder die Vorderräder die Gleitgrenze erreichen und blockieren. Um das erfindungsgemäße Ziel, ein vorzeitiges Blockieren der Hinterräder zu vermeiden, auch bei ungünstigen Verhältnissen mit Sicherheit erreichen zu können, darf deshalb das Verhältnis der Bremskräfte an den Vorder- und Hinterrädern nicht zu klein gewählt werden und sollte mindestens 2 : 1 betragen. Andererseits wird man das Verhältnis auch nicht unnötig groß, z.B. nicht größer als 8 : 1 wählen, weil die Bremswirkung an den Vorderrädern ja nicht beliebig gesteigert und somit ein hohes Verhältnis nur durch Verzicht auf Bremswirkung an den Hinterrädern, und damit an Gesamtbremswirkung erreicht werden kann. Ein erfindungsgemäß bevorzugtes Verhältnis liegt zwischen 3 : 1 und 5 : 1 und beträgt insbesondere ca. 4 : 1.

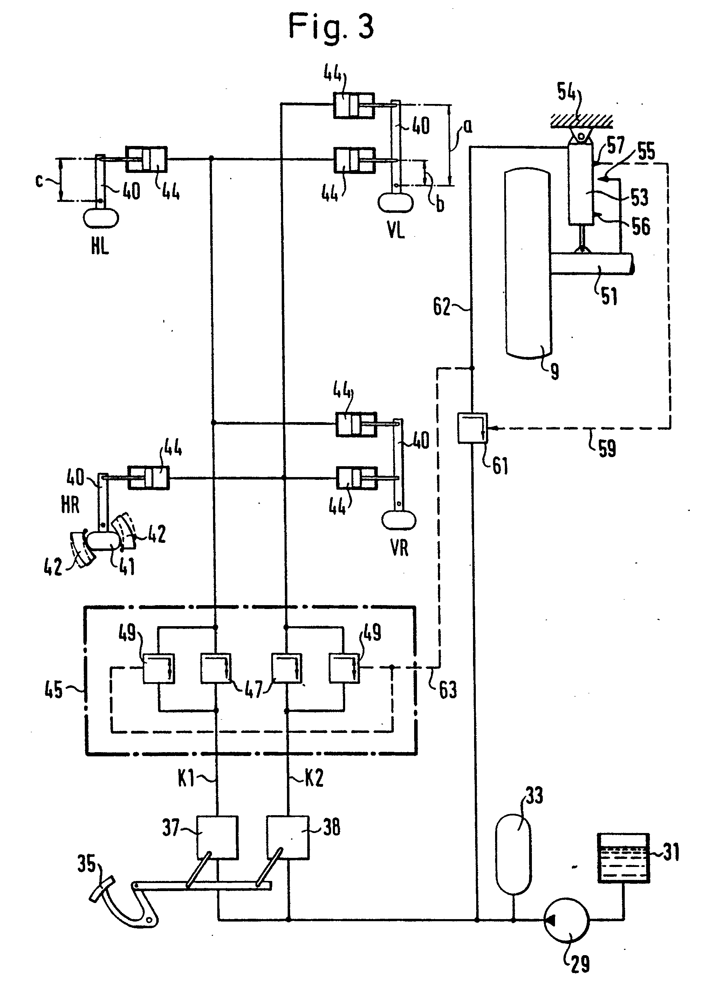

Bei dem in Fig. 3 nur schematisch und vereinfacht dargestellten Hydrauliksystem fördert eine Pumpe 29 aus einem Vorratsbehälter 31 Hydraulikmedium, um den Betriebsdruck zu erzeugen. Es kann ein Druckspeicher 33 vorgesehen sein. Mittels des Bremspedals 35 des Schleppfahrzeugs werden Ventile 37, 38 gesteuert, die das Hydraulikmedium auf zwei Bremskreise K1 und K2 freigeben. Jedem der Hinterräder HL und HR und jedem der Vorderräder VL und VR ist ein Bremshebel 40 zugeordnet, welcher Nocken 41 trägt, durch die die Bremsbacken 42 z.B. einer Trommelbremse betätigt werden können, wie in der Zeichnung nur für das rechte Hinterrad HR schematisch angedeutet ist. An den Bremshebeln 40 greifen mit den Bremskreisen K1, K2 verbundene Bremszylinder 44 an, und zwar an den Bremshebeln 40 der Hinterräder HL, HR jeweils ein Bremszylinder 44 und an den Bremshebeln der Vorderräder VL, VR jeweils zwei Bremszylinder 40. Diese Bremszylinder sind in bestimmter Weise an die beiden Bremskreise K1, K2 angeschlossen und greifen an den zugehörigen Bremshebeln 40 mit unterschiedlichen Hebelarmen a, b und c bezüglich der Schwenkachse des Hebelarmes an. Alle Bremszylinder 44 sind gleich groß dimensioniert und werden mit gleichen Drücken beaufschlagt. Durch die unterschiedliche Anzahl und die unterschiedlichen Hebelarme der an den Bremshebeln 40 angreifenden Bremszylinder ergeben sich jedoch unterschiedliche Bremskräfte an den Vorderrädern und Hinterrädern. Die Hebelarme sind so gewählt, daß das Verhältnis der an den Vorderrädern und an den Hinterrädern erzeugten Bremskräfte einen gewünschten Wert, z.B. 4 : 1 hat. Außerdem ist jeweils in einem Bremskreis, z.B. K2, der Hydraulikzylinder 44, der an einem Vorderrad, z.B. VL, mit dem größeren Hebelarm a angreift, mit den Bremszylindern 44, die auf der anderen Fahrzeugseite am Hinterrad HR unter dem Hebelarm c und am anderen Vorderrad unter dem Hebelarm b angreifen, miteinander verbunden, und die Hebelarme sind so gewählt, daß die Summe der Bremskräfte am Vorder- und Hinterrad VR, HR der einen Fahrzeugseite gleich der Bremskraft am Vorderrad VL der anderen Fahrzeugseite ist. Für den anderen Bremskreis K1 gilt entsprechend umgekehrt dasselbe. Dadurch wird erreicht, daß auch bei Ausfall eines der beiden Bremskreise K1, K2 der funktionsfähig verbleibende Bremskreis an den Rädern Bremskräfte erzeugt, die auf beiden Fahrzeugseiten gleich sind und an Vorder- und Hinterachse das gewünschte Verhältnis haben. Bei einem gewünschten Verhältnis der vorderen und hinteren Bremskräfte von z.B. 4 : 1 wird diese Forderung erreicht, wenn sich die Hebelarme a, b, c wie 5 : 3 : 2 verhalten.

Fig. 3 zeigt ferner einen Bremskraftbegrenzer 45 zur Festlegung eines maximalen Druckes in jedem der beiden Bremskreise K1, K2 und damit eines Maximalwertes der an den Vorder- bzw. Hinterrädern wirkenden Bremskräfte bei Vollbremsung. Bei dem Ausführungsbeispiel umfaßt der Bremskraftbegrenzer 45 für jeden der beiden Bremskreise je ein erstes Druckbegrenzungsventil 47, welches normalerweise den Druck auf einen ersten Grenzwert B1 festlegt. Parallel dazu ist ein steuerbares weiteres Druckbegrenzungsventil 49 vorgesehen. Durch Öffnen des Ventils 49 kann der Druck in den Bremskreisen K1, K2 über den vom ersten Begrenzungsventil 47 festgelegten Grenzwert, hinaus erhöht werden, wobei dieser höhere Druck vom jeweiligen Öffnungszustand des Begrenzungsventils 49 begrenzt ist.

Dies geschieht erfindungsgemäß in Abhängigkeit von der durch das Bugrad des Flugzeuges auf das Schleppfahrzeug ausgeübten Gewichtslast, die sich aus der statischen Gewichtslast und aus der beim Bremsen zusätzlich auftretenden dynamischen Belastung zusammensetzt. Das Schleppfahrzeug ist, wie an sich bekannt, mit einer hydraulischen Niveauregelung ausgerüstet, die für eine Konstanthaltung der Bodenfreiheit des Schleppfahrzeuges unabhähgig von der Gewichtsbelastung sorgt. Solche Niveauregelsysteme sind bekannt, und in Fig. 3 ist deshalb nur ein vereinfachtes Beispiel schematisch angedeutet. Der Radträger 51 z.B. eines Vorderrades 9 ist über einen Hydraulikzylinder 53 (sowie natürlich über eine der Einfachheit halber weggelassene Federung) am Fahrgestell 54 abgestützt. Dem Hydraulikzylinder 53 ist ein Schaltbetätiger 55 zugeordnet, der mit zwei Grenzschaltern 56, 57 zusammenwirkt und bei gewichtsbedingt stärkeren Einfedern des Vorderrades 9 den Grenzschalter 57 betätigt, wodurch über eine elektrische Steuerleitung 59 ein Ventil 61 in der zum Zylinder 53 führenden Hydraulikleitung 62 geöffnet und zusätzlich Hydraulikmedium dem Zylinder 53 zugeführt wird, um den Druck zu erhöhen und die ursprüngliche Bodenfreiheit wieder herzustellen. Bei einem solchen System ist der Druck im Zylinder 53 und damit in der Leitung 62 im wesentlichen proportional zur Gewichtsbelastung des Schleppfahrzeuges durch das Bugfahrwerk des geschleppten Flugzeuges. Erfindungsgemäß wird nun in Abhängigkeit vom Druck in der Leitung 62 über die hydraulische Steuerleitung 63 das steuerbare Begrenzungsventil 49 in jedem der Bremskreise K1, K2 so gesteuert, daß es geöffnet wird, wenn der Niveauregeldruck, d.h. die Gewichtsbelastung des Schleppfahrzeuges, einen bestimmten Wert überschreitet, wodurch der Grenzwert der Bremskraft in den Bremskreisen K1, K2 entsprechend heraufgesetzt wird.

Fig. 4 zeigt eine bevorzugte Form der Abhängigkeit der maximalen Bremskraft, d.h. der bei Vollbremsung wirkenden Bremskraft, von der auf das Schleppfahrzeug wirkenden Last. Auf der Abszisse ist die sich aus Eigengewicht und Auflagelast ergebende Gesamtlast des Schleppfahrzeuges, auf der Ordinate die jeweils bei Vollbremsung wirkende Bremskraft aufgetragen. Die Gerade G1 gibt die durch den Kraftschluß zwischen Rädern und Fahrbahn bedingte physikalische Höchstgrenze der möglichen Bremskraft wieder. Die Gerade G2 gibt die gesetzlich vorgeschriebene Mindestabbremsung von 45 % (definiert als Verhältnis zwischen der maximal möglichen Bremskraft bei trockener Fahrbahn und der Summe der Achslasten) wieder. Die bei Vollbremsung wirkende Bremskraft muß zwischen den Geraden G1 und G2 liegen. Erfindungsgemäß begrenzen die Begrenzungsventile 47 des Bremskraftbegrenzers 45 die maximale Bremskraft auf einen ersten Grenzwert B1, solange die Gesamtlast des Schleppfahrzeuges einschließlich seiner Auflagelast einen vorgegebenen Wert L1 nicht übersteigt. Der Wert L1 ist so bemessen, daß er über derjenigen Last liegt, die beim Schleppen von üblichen Verkehrsflugzeugen der kleineren Typen, wie z.B. Boeing B737, B757 oder Airbus A300 auftreten kann. Die zugehörige maximale Bremskraft B1 ist so ausgelegt, daß die einerseits ausreicht, um das leere Schleppfahrzeug mit der gesetzlichen Mindestabbremsung von 45 % abzubremsen, andererseits aber nicht größer ist als die Belastung, die für die Bugfahrwerke der in Frage kommenden kleineren Flugzeugtypen zulässig ist. Ein geeigneter Wert für L1 ist z.B. eine Gesamtlast von ca. 240 kN, während für die zugehörige maximale Bremskraft B1 ein geeigneter Wert bei z.B.

140 kN festgelegt werden kann, der sich, wie oben ausgeführt, im Verhältnis 4 : 1 auf die Vorder- und Hinterräder verteilt.

Wenn beim Schleppen von größeren Flugzeugtypen, z.B. Großraumflugzeugen wie DC10, oder Boeing B747, der vorgegebene Wert L1 der Belastung überschritten wird, und der Niveauregeldruck entsprechend ansteigt, so wird durch Öffnen des Ventils 61 (Fig.3 der Hydraulikdruck des Niveauregelsystems auf die Ventile 49 aufgegeben und diese druckabhängig aufgesteuert, so daß der Druck in den Bremskreisen K1 und K2 und damit die maximale Bremskraft entsprechend der Geraden G3 in Fig. 4 linear erhöht wird. Diese lastproportionale Erhöhung der maximalen Bremskraft endet bei einem zweiten Grenzwert B2, der sich aus der vorgegebenen Leistungsgrenze des installierten Bremssystems ergibt. Dieser zweite Grenzwert B2 entspricht nicht der Leistungsgrenze der Betriebsbremse, die gegeben wäre, wenn auf alle Räder die gleiche Bremskraft wirken würde. Durch die erfindungsgemäß niedrigere Bremskraft an den Hinterrädern ergibt sich eine Einbuße an Gesamtbremskraft, und bei einem Verhältnis der Bremskräfte an Vorder- und Hinterachse von 4 : 1 entspricht der Grenzwert B2 nur dem Bruchteil 5/8 der theoretischen Leistungsgrenze. Bei den praktisch vorkommenden Bremssystemen liegt der Grenzwert B2 aber unter der zulässigen Belastung, die beim Bremsen auf die Bugfahrwerke der größeren Verkehrsflugzeuge der oben genannten Typen ausgeübt werden kann. Sollte dies nicht gewährleistet sein, so müßte der Grenzwert B2 durch zusätzliche Druckbegrenzung in den steuerbaren Ventilen 49 entsprechend festgelegt werden. Aus dem Vorstehenden ergibt sich, daß die bei Vollbremsung auf trockener Fahrbahn wirkende Bremskraft gewichtsabhängig in dem schraffierten Bereich der Fig. 4 liegen wird. Bei nasser oder glatter Fahrbahn gelten selbstverständlich niedrigere Bremskräfte, die unterhalb der Geraden G2 liegen werden.

Durch die erfindungsgemäße lastabhängige Steuerung der maximalen Bremskraft wird beim Transportieren besonders großer und schwerer Flugzeuge, deren Bugfahrwerke auch entsprechend stärker dimensioniert und belastbar sind, eine entsprechend größere Bremskraft bei Vollbremsung zur Verfügung gestellt. Der Wert B2 kann z.B. 200 kN betragen, was bei einem 4 : 1 Verhältnis einer maximalen Bremskraft von 160 kN an den Vorderrädern und 40 kN an den Hinterrädern entspricht.

## Patentansprüche

1. Bremssystem für Schleppfahrzeuge, mit hydraulisch betätigten Bremsen an mindestens zwei Vorderrädern und an mindestens zwei Hinterrädern, zwei getrennten Bremskreisen (K1, K2), von denen jeder auf die Bremsen beider Vorderräder (VR, VL) und jeweils eines Hinterrades (HR bzw. HL) wirkt, und einer Steuereinrichtung zum Steuern der Bremskraft an den Bremsen, dadurch **gekennzeichnet,** daß in jedem der beiden Bremskreise (K1, K2) die an den Vorderrädern und Hinterrädern erzeugten Bremskräfte derart ungleich bemessen sind, daß in jedem Bremskreis (K1, K2) die Summe der am Hinterrad (HR) und dem auf der gleichen Seite liegenden Vorderrad (VR) erzeugten Bremskräfte gleich der am Vorderrad (VL) der anderen Fahrzeugseite erzeugten Bremskraft ist.

2. Bremssystem nach Anspruch 1 , bei dem für das Betätigen der Bremsen an jedem Rad Bremshebel vorgesehen sind, an denen Hydraulikzylinder angreifen, dadurch **gekennzeichnet,** daß die Hydraulikzylinder (44) an allen Rädern gleich dimensioniert und mit gleichem Druck beaufschlagt sind, und daß die unterschiedlichen Bremskräfte an den Rädern durch unterschiedliche Länge der wirksamen Hebelarme (a, b, c) der Bremshebel und/oder durch unterschiedliche Anzahl der an den verschiedenen Bremshebels angreifenden Hydraulikzylindern bewirkt werden.

3. Bremssystem nach Anspruch 2, dadurch **gekennzeichnet,** daß am Bremshebel (40) jedes Vorderrades (VL, VR) zwei Hydraulikzylinder (44) mit unterschiedlichen Hebelarmen (a, b) und am Bremshebel (40) jedes Hinterrades (HL, HR) ein Hydraulikzylinder (44) angreift und daß der Hydraulikzylinder (44) des jeweiligen Hinterrades (HL) mit dem am kürzeren Hebelarm (b) angreifenden Hydraulikzylinder (44) des Vorderrades (VL) der gleichen Fahrzeugseite und dem am längeren Hebelarm (a) angreifenden Hydraulikzylinder (44) des Vorderrades (VR) der anderen Fahrzeugseite zu jeweils einem Bremskreis (K1) verbunden ist.

4. Bremssystem nach Anspruch 3, dadurch **gekennzeichnet,** daß das Verhältnis der an den vorderen und hinteren Rädern (9, 11) wirkenden Bremskräfte zwischen 2 : 1 und 8 : 1, vorzugsweise zwischen 3 : 1 und 5 : 1 liegt, und insbesondere ca. 4 : 1 beträgt.

5. Bremssystem nach einem der Ansprüche 1 bis 5 für ein Transportfahrzeug für aufliegende Schlepplasten, insb. für ein Transportfahrzeug für Flugzeuge, das eine Hub- und Einspanneinrichtung zum Abstützen des Bugrades des Flugzeugs aufweist, wobei das Bremssystem einen Bremskraftbegrenzer aufweist, der die Bremskraft auf einen Höchstwert begrenzt, der in Abhängigkeit von der aufliegenden Gewichtslast veränderbar ist, dadurch **gekennzeichnet,** daß der Bremskraftbegrenzer (45) einen ersten Grenzwert (B1) der Bremskraft vorgibt,wenn die Gewichtslast (L) unter einem ersten vorgegebenen Wert (L1) liegt, und einen mit zunehmender Gewichtsbelastung (L) kontinuierlich zunehmenden Grenzwert (G3) der Bremskraft vorgibt, wenn die Gewichtsbelastung (L) über dem ersten vorgegebenen Wert (L1) liegt.

6. Bremssystem nach Anspruch 5, dadurch **gekennzeichnet,** daß das Fahrzeug (3) ein hydraulisches Niveauregelsystem (53, 55, 57, 61) zum belastungsunabhängigen Konstanthalten der Bodenfreiheit aufweist, und daß der vom Bremskraftbegrenzer (45) vorgegebene Grenzwert der Bremskraft in Abhängigkeit vom Druck im Niveauregelsystem steuerbar ist.

## Claims

1. Brake system for towing vehicles, with hydraulically operated brakes on at least two front wheels and on at least two rear wheels, two separate brake circuits (K1, K2), of which each acts on the brakes of both front wheels (VR, VL) and respectively one rear wheel (HR or HL), and a control device for controlling the braking force at the brakes, characterised in that in each of the two brake circuits (K1, K2) the braking forces produced at the front wheels and rear wheels are designed to be unequal so that in each brake circuit (K1, K2), the sum of the braking forces produced at the rear wheel (HR) and the front wheel (VR) lying on the same side is equal to the braking force produced at the front wheel (VL) of the other side of the vehicle.

2. Brake system according to Claim 1, in which brake levers are provided for actuating the brakes on each wheel, on which levers hydraulic cylinders act, characterised in that the hydraulic cylinders (44) on all wheels have the same dimensions and receive the same pressure and that the different braking forces on the wheels are brought about by different lengths of the effective lever arms (a, b, c) of the brake lever and/or due to a different number of the hydraulic cylinders acting on the different brake levers.

3. Brake system according to Claim 2, characterised in that acting on the brake lever (40) of each front wheel (VL, VR) are two hydraulic cylinders (44) with different lever arms (a, b) and on the brake lever (40) of each rear wheel (HL, HR) is a hydraulic cylinder (44) and that the hydraulic cylinder (44) of the respective rear wheel (HL) with the hydraulic cylinder (44) of the front wheel (VL) acting on the shorter lever arm (b) on the same side of the vehicle and the hydraulic cylinder (44) of the front wheel (VR) acting on the longer lever arm (a) on the other side of the vehicle is connected to respectively one brake circuit (K1).

4. Brake system according to Claim 3, characterised in that the ratio of the braking forces acting on the front and rear wheels (9, 11) lies between 2:1 and 8:1, preferably between 3:1 and 5:1, and in particular amounts to approximately 4:1.

5. Brake system according to one of Claims 1 to 5 for a transporting vehicle for supported loads to be towed, in particular for a transporting vehicle for aircraft, which comprises a lifting and holding device for supporting the nose wheel of the aircraft, the brake system having a braking force limiter, which limits the braking force to a maximum value, which can be varied depending on the dead weight supported, characterised in that the braking force limiter (45) defines a first limit value (B1) of the braking force, when the dead weight (L) is below a first predetermined value (L1) and defines a limit value (G3) of the braking force increasing continuously as the dead weight (L) increases, when the dead weight (L) is above the first predetermined value (L1).

6. Brake system according to Claim 5, characterised in that the vehicle (3) comprises a hydraulic level-regulating system (53, 55, 57, 61) for maintaining ground clearance independent of load, and that the limit value of the braking force determined by the braking force limiter (45) can be controlled depending on the pressure in the level-regulating system.

## Revendications

1. Système de freinage pour véhicules de remorquage, comportant des freins à manoeuvre hydraulique sur au moins deux roues avant et au moins deux roues arrière, deux circuits de freinage distincts (K1, K2), dont chacun agit sur les freins des deux roues avant (VR, VL) et, respectivement, d'une roue arrière (HR ou HL), et un dispositif de commande pour commander la force de freinage aux freins, système caractérisé par le fait que dans chacun des deux circuits de freinage (K1, K2), les forces de freinage produites sur les roues avant et sur les roues arrière sont de valeurs inégales, de façon telle que dans chaque circuit de freinage (K1, K2), la somme des forces de freinage produites sur la roue arrière (HR) et sur la roue avant (VR) située du même côté soit égale à la force de freinage produite sur la roue avant (VL) de l'autre côté du véhicule.

2. Système de freinage selon la revendication 1, dans le cas duquel, pour la manoeuvre des freins sur chaque roue, sont prévus des leviers de freinage sur lesquels agissent des vérins hydrauliques, système caractérisé par le fait que, sur toutes les roues, les vérins hydrauliques (44) sont de même dimension et sont alimentés sous la même pression, et par le fait que les forces de freinage différentes sur les roues résultent de la longueur différente des bras utiles (a, b, c) des leviers de frein et/ou du nombre différent de vérins hydrauliques agissant sur les différents leviers de frein.

3. Système de freinage selon la revendication 2,, caractérisé par le fait que sur le levier de frein (40) de chaque roue avant (VL, VR) agissent deux vérins hydrauliques (44) de bras de levier différents et que, sur le levier de frein (40) de chaque roue arrière (HL, HR) agit un vérin hydraulique (44), et par le fait que le vérin hydraulique (44) de la roue arrière respective (HL) est relié avec le vérin hydraulique (44) de la roue avant (VL) du même côté du véhicule, qui agit sur le bras de levier le plus court (b) et avec le vérin hydraulique (44) de la roue avant (VR) de l'autre côté du véhicule, qui agit sur le bras de levier le plus long (a), pour former respectivement un circuit de freinage (K1).

4. Système de freinage selon la revendication 3, caractérisé par le fait que le rapport entre les forces de freinage agissant sur les roues avant (9) et celles agissant sur les roues arrière (11) se situe entre 2:1 et 8:1, de préférence entre 3:1 et 5:1, et en particulier que ce rapport vaut environ 4:1.

5. Système de freinage selon une des revendications 1 à 4 pour un véhicule de transport pour des charges remorquées qui s'y appuient, en particulier pour un véhicule de transport pour avions, qui présente un dispositif de levage et de bridage pour soutenir le train avant de l'avion, étant précisé que le système de freinage présente un limiteur de la force de freinage, qui limite la force de freinage à une valeur maximale que l'on peut modifier en fonction de la contrainte pondérale qui s'exerce, système caractérisé par le fait que le limiteur (45) de la force de freinage prescrit une première valeur limite (B1) de la force de freinage lorsque la contrainte pondérale (L) se situe sous une première valeur prescrite (L1), et prescrit une valeur limite (G3) de la force de freinage qui croît de façon continue avec une contrainte pondérale (L) croissante, lorsque la contrainte pondérale (L) se situe au-dessus de la première valeur prescrite (L1).

6. Système de freinage selon la revendication 5, caractérisé par le fait que le véhicule (3) présente un système de régulation hydraulique de niveau (53, 55, 57,, 61) pour maintenir constante la garde au sol indépendamment de la contrainte, et par le fait que la valeur limite de la force de freinage prescrite par le limiteur (45) de la force de freinage peut être pilotée en fonction de la pression régnant dans le système de régulation du niveau.

Fig. 1

EP 0 309 697 B1

# Fig. 2

# Fig. 4

# Fig. 3